# EUROPEAN PATENT APPLICATION

(11) **EP 4 707 066 A1**
(43) Date of publication of application: **11.03.2026**
(21) Application number: 25199743.3
(22) Date of filing: 02.09.2025
(51) Int. Cl.: B60N 2/28

(54) **CHILD SAFETY SEAT**

(30) Priority: 03.09.2024 CN 202411231200
(71) Applicant: Wonderland Switzerland AG, 6312 Steinhausen (CH)
(72) Inventor: ZHANG, Daliang, Dongguan, Guangdong, 523648 (CN); LIANG, Jiajun, Dongguan, Guangdong, 523648 (CN)
(74) Representative: Pfenning, Meinig & Partner mbB

(57) **Abstract**

The present disclosure discloses a child safety seat (1000), including a seat body and a top strap mechanism (4). The top strap mechanism (4) is connected to a backrest portion (2) of the seat body. The top strap mechanism (4) includes a pull-up strap assembly (41) and a retaining member (42). One end of the pull-up strap assembly (41) is connected to the seat body, and another end of the top strap mechanism (4) is provided with a snapping member (412) configured to be engaged with a car seat. The retaining member (42) is connected to both the seat body and the pull-up strap assembly (41). The retaining member (42) is an elastic member, and an upward force is applied to the pull-up strap assembly (41), such that the retaining member (42) is capable of supporting the pull-up strap assembly (41) to protrude upward relative to the child safety seat (1000). When the pull-up strap assembly (41) is in a relaxed state, the retaining member (42) is capable of supporting the pull-up strap assembly (41) to protrude downward relative to the backrest portion (2). When the pull-up strap assembly (41) is in a tensioned state, the pull-up strap assembly (41) is capable of pressing against the retaining member (42), such that the retaining member (42) is elastically deformed.

## Description

### TECHNICAL FIELD

The present disclosure relates to the technical field of children's products, and in particular to a top strap mechanism and a child safety seat including the same.

### BACKGROUND

At present, child safety seats cannot meet the safety requirements of children by only relying on car seat belts, ISOFIX and other anchoring devices to tie the child safety seat, so it is necessary to further tie child safety seats with top tethers to ensure safety. However, many users forget to tie the top tethers when using the child safety seats, and in this case, the safety of the children cannot be guaranteed. Therefore, a lower-cost and more stable structure is urgently needed to enhance the usability of the top tether of the child safety seat.

### SUMMARY

According to the present disclosure, a child safety seat is provided, including a seat body and a top strap mechanism. The top strap mechanism is connected to the backrest portion of the seat body.

The top strap mechanism comprises a pull-up strap assembly and a retaining member. One end of the pull-up strap assembly is connected to the seat body, and another end of the pull-up strap assembly is provided with a snapping member configured to be engaged with a vehicle seat. The retaining member is connected to both the seat body and the pull-up strap assembly respectively. The retaining member is an elastic member and applies an upward force to the pull-up strap assembly, such that the retaining member is capable of supporting the pull-up strap assembly to protrude upward relative to the child safety seat. When the pull-up strap assembly is in a relaxed state, the retaining member is capable of supporting the pull-up strap assembly to protrude upward relative to the backrest portion. When the pull-up strap assembly is in a tensioned state, the pull-up strap assembly is capable of pressing against the retaining member, such that the retaining member is elastically deformed.

In an embodiment, the retaining member includes a fixing segment and a supporting segment connected to the fixing segment. The fixing segment is connected to the backrest portion. When the top strap mechanism is in a relaxed state, the supporting segment extends upward from an upper end edge of the backrest portion and is configured to support the pull-up strap assembly.

In an embodiment, the supporting segment includes a first bending segment, and the first bending segment warps backward from the upper end edge toward a direction away from the backrest portion.

In an embodiment, the supporting segment includes a second bending segment, and the second bending segment extends forward toward a direction close to the backrest portion, such that the pull-up strap assembly is maintained in front of the backrest portion.

In an embodiment, a mounting groove and a pull-up strap through groove are formed on the upper end edge of the backrest portion. The fixing segment is inserted in the mounting groove. The pull-up strap assembly passes through the pull-up strap through groove. A width of a top of the mounting groove is greater than a width of a bottom of the mounting groove, so as to form a guide space for the retaining member at the top of the mounting groove.

In an embodiment, the mounting groove is inclined forward from bottom to top. The fixing segment is inserted in the mounting groove inclinedly along the mounting groove. A top of the mounting groove is provided with an abutment portion protruding backward. The abutment portion abuts against the supporting segment to warp backward, such that an extension direction of the fixing segment and an extension direction of the supporting segment are different.

In an embodiment, the backrest portion includes a fastener connected to a backrest main body of the backrest portion. The fixing segment is connected to the backrest main body via the fastener. The fixing segment includes a mounting ring. The backrest main body includes an outer housing and an inner housing connected together to form an inner cavity. The backrest main body further includes a locking rod protruding from one of the outer housing and the inner housing to the inner cavity. The mounting ring is sleeved on the locking rod and fastened by the fastener. The upper end edge includes a mounting groove in communication with the inner cavity, and the retaining member protrudes outward from the mounting groove.

In an embodiment, the pull-up strap assembly includes a woven strap and a length adjusting member. A first end of the woven strap is connected to the backrest portion and a second end of the woven strap is provided with the snapping member. The length adjusting member passes through the woven strap and is configured to adjust a length of the woven strap. The supporting segment is connected to the woven strap or the length adjusting member.

In an embodiment, the pull-up strap assembly is Y-shaped, the pull-up strap assembly includes a woven strap and a snapping member passing through the woven strap. The snapping member divides the woven strap into a first woven strap segment and a second woven strap segment connected to the first woven strap segment. The first woven strap segment and the second woven strap segment are connected to opposite sides of the backrest portion respectively. The first woven strap segment is provided with a length adjusting member, and the retaining member is connected to the first woven strap segment.

In an embodiment, the retaining member is at least one of a compression spring, a tension spring, a herringbone spring, a spring sheet and a gooseneck. The supporting segment is sewn on the pull-up strap assembly. Alternatively, the pull-up strap assembly is provided with a pocket, and the supporting segment is sleeved in the pocket.

In an embodiment, the seat body further includes a top rod. The top rod is disposed behind the backrest portion, and one end of the pull-up strap assembly is connected to the top rod of the seat body.

The retaining member includes a fixing segment and a supporting segment connected to the fixing segment. The fixing segment is connected to the top rod. The supporting segment extends upward from an upper end of the top rod and is configured to support the pull-up strap assembly.

### BRIEF DESCRIPTION OF THE DRAWINGS

To describe the technical solutions in the embodiments of the present disclosure more clearly, the following briefly describes the accompanying drawings required for describing the embodiments. Apparently, the accompanying drawings in the following description show merely some embodiments of the present disclosure, and those who skill in the art may still derive other drawings from these accompanying drawings without creative efforts.

In addition, the drawings are not drawn in 1:1 ratio, and the relative sizes of the various elements are drawn in the drawings only as examples, and not necessarily in true proportion. In the drawings:
FIG. 1 schematically shows a perspective view of a child safety seat viewed from a backrest portion to the front direction according to an embodiment of the present disclosure, where a top strap mechanism is connected to a car seat.
FIG. 2 schematically shows a perspective view of the child safety seat viewed from the front to the backrest portion according to an embodiment of the present disclosure, where the top strap mechanism is not connected to the car seat.
FIG. 3 schematically shows a left view of the child safety seat according to an embodiment of the present disclosure, where the top strap mechanism is in a warping state relative to a headrest portion.
FIG. 4 schematically shows a front view of the child safety seat according to an embodiment of the present disclosure.
FIG. 5 schematically shows a top view of the child safety seat according to an embodiment of the present disclosure.
FIG. 6 schematically shows a perspective view and a partial enlarged view of the child safety seat according to an embodiment of the present disclosure, where an outer housing of the backrest portion is removed.
FIG. 7 schematically shows a perspective view and a partial enlarged view of the child safety seat according to an embodiment of the present disclosure, where a retaining member has not yet been connected to the backrest portion.
FIG. 8 schematically shows a section view and a partial enlarged view of the child safety seat shown in FIG. 4 along a section line A-A.
FIG. 9 schematically shows a top view of the child safety seat according to another embodiment of the present disclosure.
FIG. 10 schematically shows a rear view of the child safety seat according to an embodiment of the present disclosure, where the retaining member is removed.
FIG. 11 schematically shows a perspective view of the child safety seat according to an embodiment of the present disclosure, where the retaining member is a spring sheet.
FIG. 12 shows a perspective view of the child safety seat according to another embodiment of the present disclosure, where the retaining member extends parallel to the headrest portion.
FIG. 13 shows a side view of the child safety seat according to another embodiment of the present disclosure, where the retaining member is in a bent state relative to the headrest portion.
FIG. 14 schematically shows the retaining member according to an embodiment of the present disclosure.
FIG. 15 schematically shows a side view of the child safety seat and a partial enlarged view thereof according to another embodiment of the present disclosure where the outer housing of the backrest portion is removed and a pull-up strap assembly is connected to the fixing rod.
FIG. 16 schematically shows an explosive view of the child safety seat according to another embodiment of the present disclosure.
FIG. 17 schematically shows a section view of the child safety seat shown in FIG. 12 along a section line B-B, where the retaining member and the outer housing of the backrest portion are disassembled from the child safety seat.
FIG. 18 schematically shows a left view of the child safety seat according to an embodiment of the present disclosure, where the top strap mechanism is in a tensioned state.
FIG. 19 schematically shows a schematic diagram of the child safety seat according to an embodiment of the present disclosure, where the top strap mechanism is in the tensioned state.
FIG. 20 schematically shows a section view and a partial enlarged view of the child safety seat shown in FIG. 12 along a section line B-B.

### Reference Numerals:

1000: child safety seat; 1: headrest portion;
2: backrest portion; 20: backrest main body; 202: upper end edge; 2021: mounting groove; 2021A : abutment portion; 2021B: guide space; 2022: pull-up strap through groove; 2022A: first through groove segment; 2022B: second through groove segment; 2022C: third through groove segment; 203: outer housing; 204: inner housing; 2041: locking rod; 2041A: locking hole; 2042: receiving portion; 2043: inner surface; 205: inner cavity; 206: fastener; 207: support bracket; 2071: groove; 21: fixing rod; 22: side wing plate;
3: seat portion; 31: ISOFIX connecting member;
4: top strap mechanism; 41: pull-up strap assembly; 411: woven strap; 4111: first woven strap segment; 4112: second woven strap segment; 415: pocket; 412: snapping member; 413: protective sleeve; 414: length adjusting member; 4140: display window; 42: retaining member; 421: fixing segment; 4211: mounting ring; 422: supporting segment; 4221: first bending segment; 4222: second bending segment; 423: fixing portion; 424: retaining portion; 43: indicating member; 431: first indication region; 432: second indication region.

### DETAILED DESCRIPTION OF THE EMBODIMENTS

In order to make the aforementioned objects, features and advantages of the present disclosure more clearly understood, the specific embodiments of the present disclosure will be described in detail below with reference to the accompanying drawings.

In the description of the present disclosure, it should be understood that the terms "up", "down", "front", "back", "left", "right", "vertical", "horizontal", "top", "bottom", "inside" and "outside" etc., indicating orientations or positional relationships, are based on the orientations or positional relationships shown in the accompanying drawings, and are only for the convenience of describing the present disclosure and simplifying the description, rather than indicating or implying that the device or element referred to must have a specific orientation, be constructed and operated in a specific orientation, and therefore should not be understood as a limitation on the present disclosure.

In addition, the terms "first" and "second" are only used for descriptive purposes, and should not be construed as indicating or implying relative importance or implying the number of indicated technical features.

In the present disclosure, unless otherwise expressly specified and limited, the terms "mounted", "connected together", "connected", "fixed" and other terms should be understood in a broad sense, for example, it may be a fixed connection or a detachable connection, or integrated; it can be a mechanical connection or an electrical connection; it can be directly connected or indirectly connected through an intermediate medium, it can be an internal connection of two elements or the interaction relationship between the two elements, unless otherwise specified limit. For those of ordinary skill in the art, the specific meanings of the above terms in the present disclosure can be understood according to specific situations.

A top tether (also called top straps) is an additional device configured to fix a child safety seat, and designed to improve the stability of a seat and reduce the forward rotation of the seat in a collision. The pull-up strap is a flexible woven strap or rope extending from a top of the child seat, and has one end provided with a hook for connecting to an anchor point inside a vehicle and another end fixed to the back or the top of the backrest portion of the child safety seat. The top tether in a non-use state naturally droops along a rear side surface of the backrest portion and is hidden by the backrest portion. Therefore, when the caregiver takes the child safety seat out of a packaging material or mounts the child safety seat on the car seat, the top tether is sometimes ignored, such that the top tether is not mounted at the anchor point of the car seat, which brings safety hazards. In addition, some child safety seats are mounted with electronic alarms to remind the caregiver to mount the top tether, but the existing electronic alarms are expensive and not stable enough.

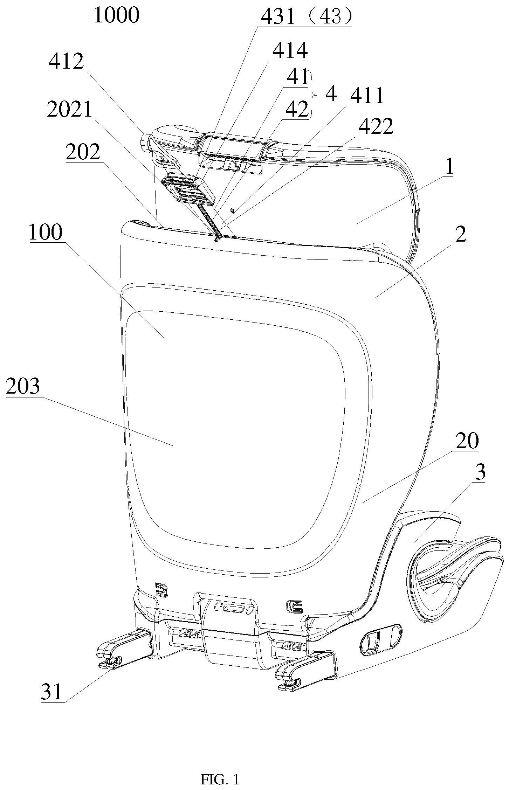

FIG. 1 to FIG. 8 and FIG. 10 schematically show a child safety seat 1000 provided according to an embodiment of the present disclosure. The child safety seat 1000 of this embodiment includes a seat body 100 and a top strap mechanism 4 connected to the seat body 100. One end of the top strap mechanism 4 is connected to the seat body 100. The child safety seat 1000 will be described together with the seat body 100 and the top strap mechanism 4 below.

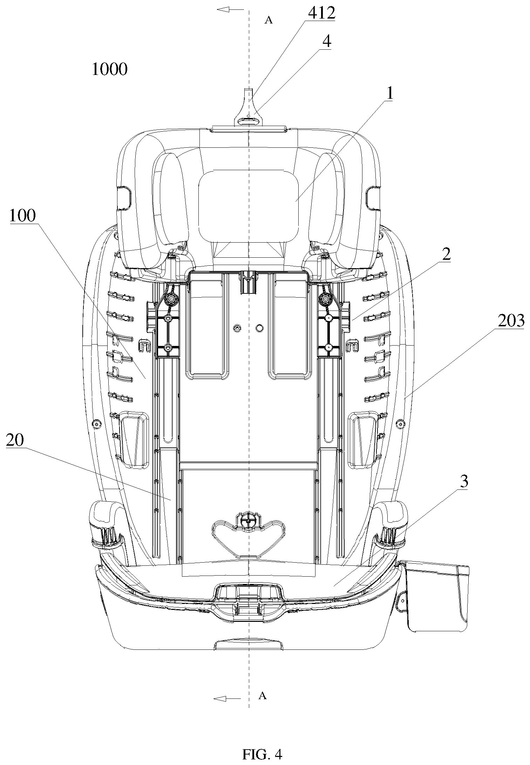

Referring to FIG. 1 and FIG. 4, the seat body 100 includes a headrest portion 1, a backrest portion 2, and a seat portion 3. One end of the backrest portion 2 is connected to the headrest portion 1, and another end of the backrest portion 2 is connected to the seat portion 3. The headrest portion 1 is located in front of the backrest portion 2. The headrest portion 1 may be slidably connected to the backrest portion 2, such that an extension length of the headrest portion 1 relative to the backrest portion 2 in a length direction thereof can be adjusted to accommodate children of different ages. The seat portion 3 may include an ISOFIX connecting member 31. The ISOFIX connecting member 31 is roughly located at a rear end of the seat portion 3 and may be connected to the car seat. The seat portion 3 may also not include the ISOFIX connecting member 31, but be fixed to the car seat through a car seat belt configured in the car.

The top strap mechanism 4 includes a pull-up strap assembly 41 and a retaining member 42. The pull-up strap assembly 41 may include a woven strap 411. One end of the pull-up strap assembly 41 is a fixed end, which is fixedly connected to the backrest portion 2 of the child safety seat 1000 by sewing or the like, and another end of the pull-up strap assembly 41 is a free end provided with a connecting member such as a hook. The pull-up strap assembly 41 may be removably connected to an anchor point of the car seat through a connecting member at the free end. In addition, the pull-up strap assembly 41 may be provided with a length adjusting member 414 for adjusting the length of the woven strap 411.

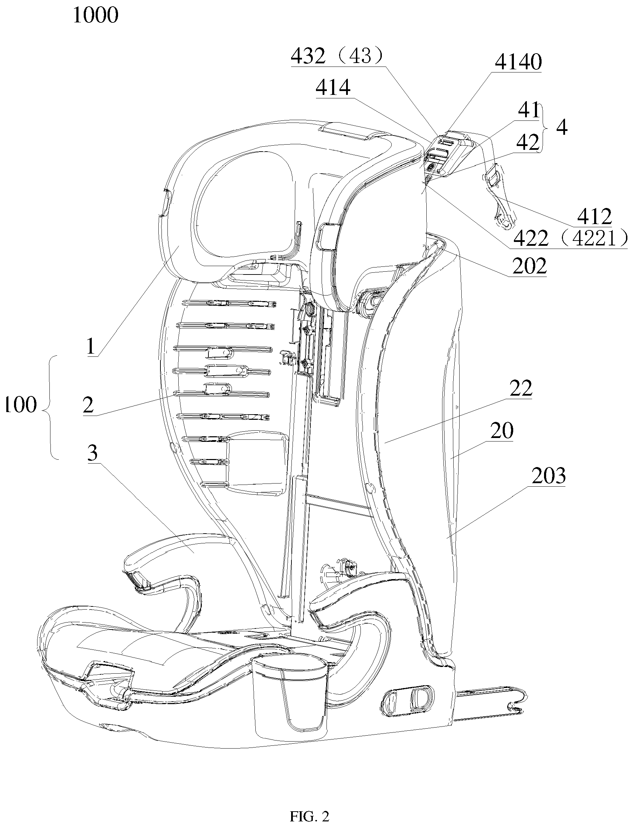

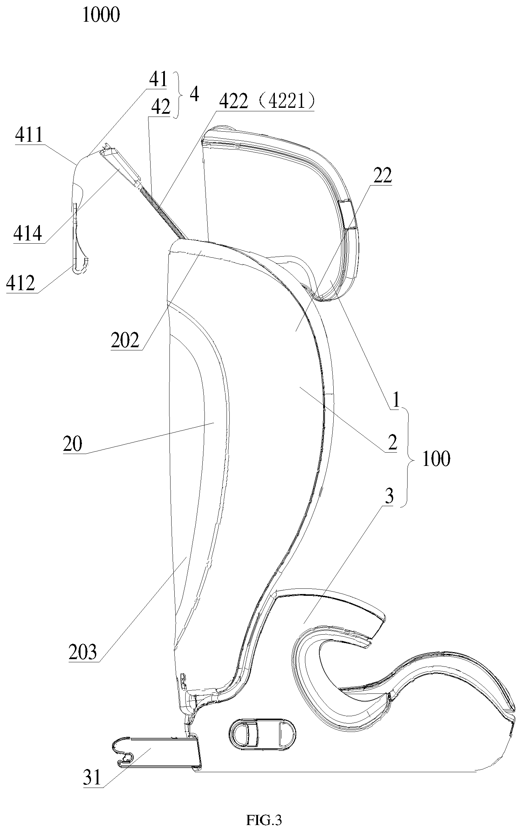

Referring to FIG. 1 and FIG. 4 to FIG. 8, when the pull-up strap assembly 41 is connected to the car seat and the pull-up strap assembly 41 is adjusted to be in a tensioned state, the top strap mechanism 4 is in a use state (see FIG. 1), and the top strap mechanism 4 helps to restraint the child safety seat 1000 to the car seat. Referring to FIG. 2 and FIG. 3, when the pull-up strap assembly 41 is not connected to the car seat, the top strap mechanism 4 is in a relaxed state and droops naturally. The retaining member 42 is an elastic member, and is connected to both the seat body 100 and the pull-up strap assembly 41. When the pull-up strap assembly 41 is in a relaxed state (i.e., not connected to the car seat), the retaining member 42 exerts an upward force on the pull-up strap assembly 41 to support the pull-up strap assembly 41, such that the pull-up strap assembly 41 protrudes upward relative to the backrest portion 2. Therefore, when the caregiver looks from the front toward the backrest portion 2, at least a portion of the pull-up strap assembly 41 is observable and not to be shielded by the backrest portion 2. When the pull-up strap assembly 41 is adjusted to be in the tensioned state, for example, by the length adjusting member 414, the pull-up strap assembly 41 is capable of pressing against the retaining member 42, such that the retaining member 42 is elastically deformed. The pull-up strap assembly 41 protrudes upward relative to the backrest portion 2, indicating that the retaining member 42 supports the pull-up strap assembly 41 to protrude relative to the backrest main body 20 in a length direction thereof on a side where the backrest main body 20 is connected to the headrest portion 1. In still other embodiments, the pull-up strap assembly 41 may be configured to be observable after looking from the front toward the backrest portion 2, when the headrest portion 1 is adjusted to be no higher than backrest portion 2. In still other embodiments, the pull-up strap assembly 41 may be configured to be observable in a slidable range of the headrest portion 1 relative to the backrest portion 2, looking from the headrest portion 1 toward the backrest portion 2. In an embodiment, the headrest portion 1 is slidably connected to the backrest portion 2, and when the headrest portion 1 slides to the highest point on the backrest portion 2 to which the headrest portion 1 can be moved, the pull-up strap assembly 41 is observable when looking from the headrest portion 1 toward the backrest portion 2. The pull-up strap assembly 41 in this embodiment is kept in a state of protruding upward relative to the backrest portion 2 through the retaining member 42, so as to prevent the pull-up strap assembly 41 from being shielded by the backrest portion 2 in a non-used state, and to reminder a caretaker to connect the top strap mechanism 4 to the car seat.

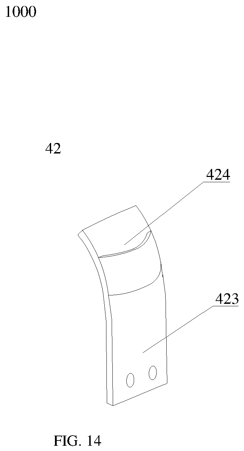

Referring to FIG. 3 and FIG. 6 to FIG. 8, the retaining member 42 includes the fixing segment 421 and the supporting segment 422 connected to the fixing segment 421 The fixing segment 421 and the supporting segment 422 may be integrally formed or connected in another manner. The backrest portion 2 includes the backrest main body 20 and a left side wing plate 22 and a right side wing plate 22 extending from the backrest main body 20 at its the left side and right side. The fixing segment 421 may be connected to the backrest main body 20 or the side wing plate 22, which is not limited herein. When the top strap mechanism 4 is in the relaxed state, the supporting segment 422 protrudes upward from a upper end edge 202 of the backrest main body 20 and is configured to support the pull-up strap assembly 41. The upper end edge 202 of the backrest main body 20 is a circumferential edge of the backrest main body 20 at a side where the backrest portion 2 is connected to the headrest portion 1. However, although the retaining member 42 shown in the figure is connected to the backrest main body 20 of the backrest portion 2, the present disclosure is not limited thereto. A person skilled in the art understands that the retaining member 42 may also be connected to the headrest portion 1. For example, when the retaining member 42 is connected to the headrest portion 1, a shape of the retaining member 42 may be as shown in FIG. 14. One end of the retaining member 42 forms a fixing portion 423 connected to the headrest portion 1, and another end of the retaining member 42 forms a ring or C-shaped retaining portion 424. A position of the retaining portion 424 is higher than a position of the headrest portion 1. The retaining portion 424 is sleeved on the pull-up strap assembly 41. When the headrest portion 1 moves up and down relative to the backrest portion 2, the retaining portion 424 drives the pull-up strap assembly 41 to move up and down such that the pull-up strap assembly 41 is not shielded by the headrest portion 1. When the top strap mechanism 4 is in a relaxed state, the retaining member 42 can support the pull-up strap assembly 41 to protrude upward relative to the backrest portion 2, such that the pull-up strap assembly 41 is observable when looking from the front toward the backrest portion 2. The term "looking from the front toward the backrest portion 2" as used herein includes a viewing angle at which the caregiver standing in straight front of or in side front of the child safety seat 1000 observes the child safety seat 1000. In this embodiment, since the retaining member 42 is capable of supporting the pull-up strap assembly 41 to protrude upward relative to the backrest portion 2, the caregiver can easily observe the top strap mechanism 4 when standing in straight front of or in side front of the child safety seat 1000.

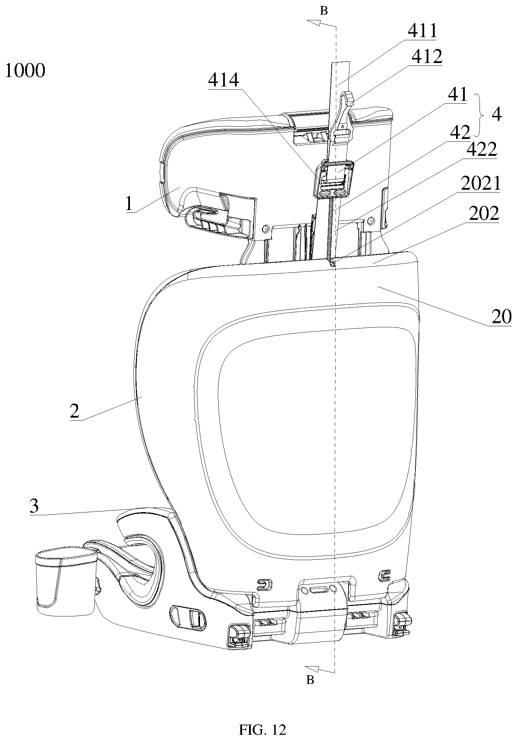

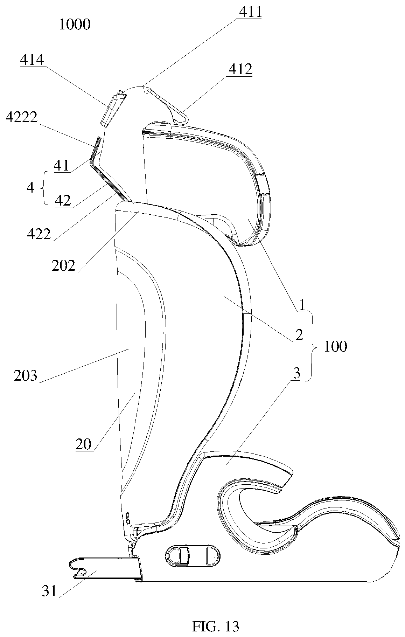

FIG. 3, FIG. 12 and FIG. 13 show several exemplary forms of the supporting segment 422 of the retaining member 42. In an embodiment shown in FIG. 3, the supporting segment 422 includes a first bending segment 4221. The first bending segment 4221 may warp from the upper end edge 202 of the backrest portion 2 toward the upper rear direction of the backrest portion 2, such that the pull-up strap assembly 41 remains in a protruding state relative to the backrest portion 2 to remind the caregiver to use the top strap mechanism 4. When the child safety seat 1000 is placed on the car seat, the supporting segment 422 of the retaining member 42 is abutted by the backrest of the car seat and bends in the vertical direction, thereby driving the pull-up strap assembly 41 upward, making it easily noticeable by the caregiver. At the same time, such an arrangement can guide a bending direction of the retaining member 42, prevent the retaining member 42 from shaking and bending to the left side and right side, which will cause the pull-up strap assembly 41 to be blocked by the headrest portion 1. Optionally, a guide space 2021B that will cause the retaining member 42 to bend in the rearward direction is formed at a top of the mounting groove 2021, and the specific structure is referred to below. In the embodiment shown in FIG. 13, the retaining member 42 also includes a second bending segment 4222. The supporting segment 422 includes a first bending segment 4221 and a second bending segment 4222, and the first bending segment 4221 extends upward from the upper end edge 202 and extends a distance toward the rear of the backrest portion 2. The second bending segment 4222 is connected to the first bending segment 4221 and is bent toward the front of the backrest portion 2, such that the pull-up strap assembly 41 is kept in an upwardly bent state relative to the backrest portion 2 to remind the caregiver to use the top strap mechanism 4. A portion of the first bending segment 4221 may be located behind the backrest portion 2. Optionally, a portion of the second bending segment 4222 may be located in front of the backrest portion 2 or the headrest portion 1. When the child safety seat 1000 is placed on a car seat, the backrest of the car seat abuts against the first bending segment 4221 of the retaining member 42 to move forward. The retaining member 42 includes the second bending segment 4222 bending toward the headrest portion 1, such that a portion of the pull-up strap assembly 41 can naturally droop in front of the headrest portion 1, thereby reminding the caregiver to mount the pull-up strap assembly 41. In other embodiments, the retaining member 42 may also include only the second bending segment 4222, and by configuring the length and the inclination angle of the second bending segment 4222, a portion of the pull-up strap assembly 41 droops in front of the headrest portion 1. In the embodiment shown in FIG. 12, the supporting segment 422 can also be configured to extend substantially straight along a length direction of the backrest portion 2, such that the pull-up strap assembly 41 is maintained in an upright state relative to the backrest portion 2. For example, the retaining member 42 is a cylindrical compression spring, and the fixing segment 421 of the retaining member 42 can be vertically inserted into the backrest portion 2. The supporting segment 422 and the fixing segment 421 are integrally formed and configured to extend substantially straight along the length direction of the backrest portion 2. The retaining member 42 configured in this way can support the pull-up strap assembly 41 such that one end of the pull-up strap assembly 41 is vertical and higher than the backrest portion 2, so as to prevent the caregiver from forgetting to connect the top strap mechanism 4 to the car seat.

The retaining member 42 can be a compression spring, a tension spring, a herringbone spring, a spring sheet or a gooseneck tube, or other forms, as long as it can support the pull-up strap assembly 41 in a non-use state to protrude upward relative to the backrest portion 2.

Referring to FIG. 1 to FIG. 8, in this embodiment, the retaining member 42 is a long strip compression spring. A lower end of the retaining member 42 is fixed to a top end of a housing of the backrest portion 2, and an upper end of the retaining member 42 extends upward from the backrest portion 2. The upper end of the retaining member 42 is sewn on the pull-up strap assembly 41 to support a portion of the woven strap of the pull-up strap assembly 41 close to the fixed end to protrude upward from the backrest portion 2. Referring to FIG. 2 and FIG. 3, when the pull-up strap assembly 41 is in a non-use state, the supporting segment 422 of the retaining member 42 supports a portion of the pull-up strap assembly 41 to be higher than the backrest portion 2, thereby reminding the caregiver. Referring to FIG. 1 and FIG.4 to FIG. 8, when the pull-up strap assembly 41 is in use, i.e., when the free end of the pull-up strap assembly 41 is engaged with the car seat, and a length of the pull-up strap assembly 41 is adjusted such that the pull-up strap assembly 41 is in the tensioned state, the supporting segment 422 of the retaining member 42 is elastically deformed under the pressing of the pull-up strap assembly 41, and is bent in an extension direction of the pull-up strap assembly 41 (see FIG. 1), thereby avoiding interference with the normal mounting of the pull-up strap assembly 41.

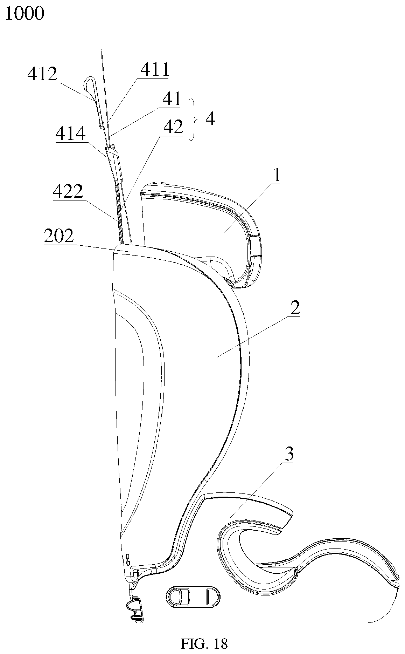

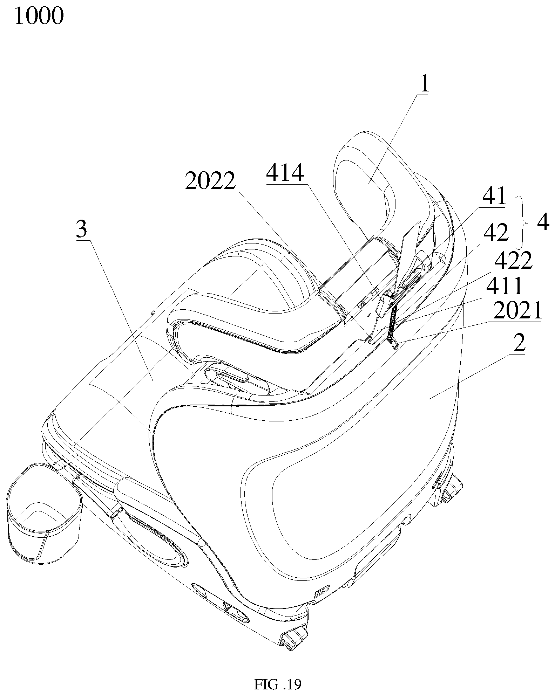

Referring to the embodiments shown in FIG. 12, FIG. 15 to FIG. 20, the retaining member 42 may be a tension spring. The lower end of the retaining member 42 is fixed to an inner housing 204 of the backrest portion 2, and the upper end of the retaining member 42 is inserted into the length adjusting member 414. Referring to FIG. 18, when the pull-up strap assembly 41 is in a non-use state, the supporting segment 422 of the retaining member 42 supports a portion of the pull-up strap assembly 41 to be higher than the backrest portion 2, such that the caregiver can notice the pull-up strap assembly 41. Referring to FIG. 12, FIG. 15 to FIG. 17 and FIG. 20, by adjusting the length adjusting member 414 to tension the pull-up strap assembly 41, the supporting segment 422 of the retaining member 42 is compressed toward the lower end of the retaining member 42 under the pressing of the pull-up strap assembly 41, thereby avoiding interference with the normal mounting of the pull-up strap assembly 41.

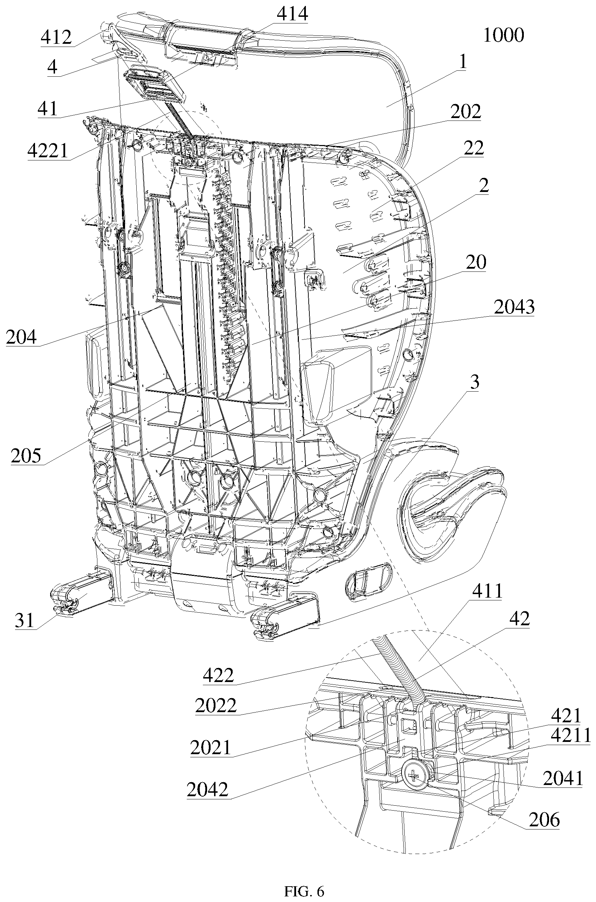

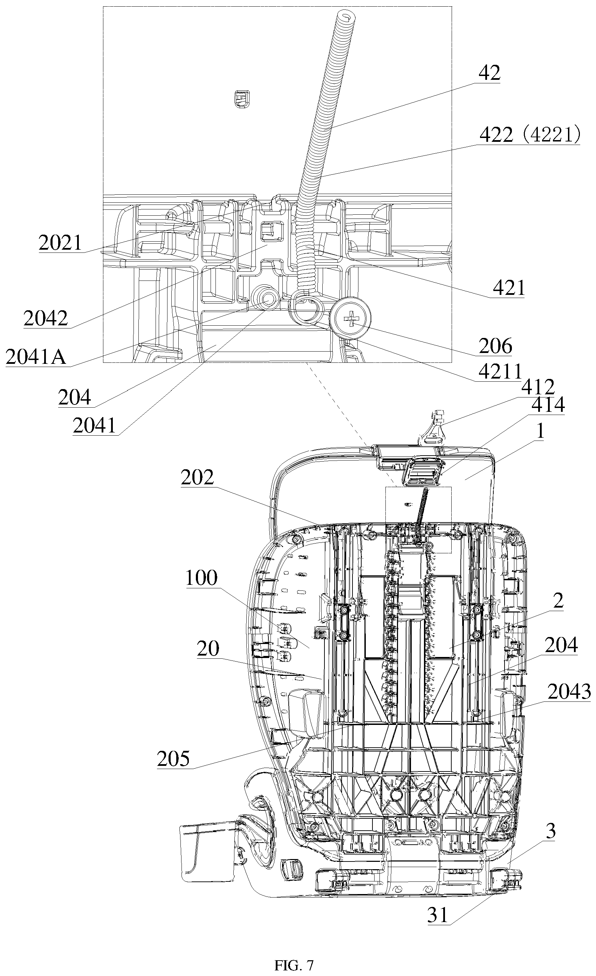

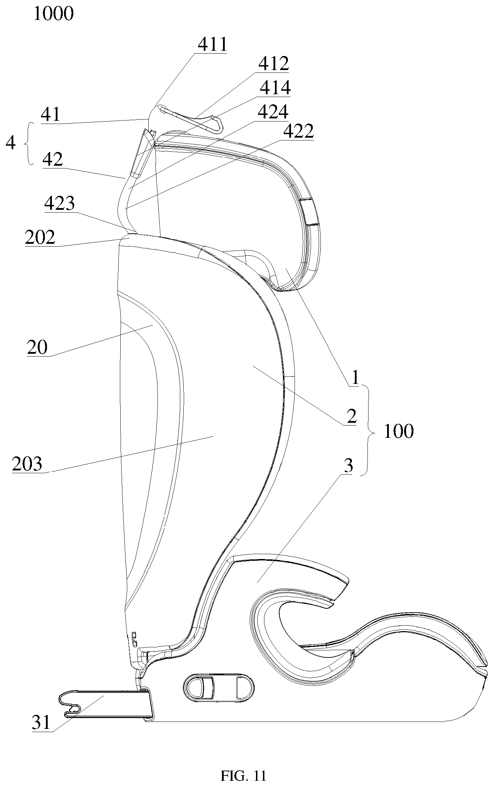

In one or more embodiments, as shown in FIG. 11 and FIG. 14, the retaining member 42 may be a spring sheet made of metal or rubber material. The fixing segment 421 of the retaining member 42 is connected to the upper end edge 202 of the backrest portion 2. For example, the retaining member 42 may be connected to the backrest portion 2 in a fixed manner such as plugging, riveting, or in a removable manner such as snapping. The supporting segment 422 is connected to the fixing segment 421 and includes a retaining portion 424. The retaining portion 424 is annular and sleeved on the pull-up strap assembly 41 to prevent the pull-up strap assembly 41 from detaching from the retaining portion 424. A pressure is applied to the supporting segment 422, causing the supporting segment 422 to bend forward relative to the backrest portion 2, thereby lowering the height of the child safety seat 1000, and saving space of a packaging box into which the child safety seat 1000 as a whole is packaged. When the pressure is withdrawn, for example, when the child safety seat 1000 is unpacked from the packaging box, the pressure applied by the packaging box on the retaining member 42 is withdrawn and the supporting segment 422 will bounce upward, driving a portion of the pull-up strap assembly 41 to protrude from the backrest portion 2, thereby attracting the attention of the caregiver and reminding the caregiver to mount the top strap mechanism 4. Referring to FIG. 6 and FIG. 7, in this embodiment, the backrest portion 2 includes a fastener 206 connected to the backrest main body 20, and the fixing segment 421 is connected to the backrest main body 20 via a fastener 206. The fastener 206 may be a rivet, a bolt, a screw, etc., as long as it can connect the fixing segment 421 to the backrest main body 20. The fixing segment 421 includes a mounting ring 4211. The backrest main body 20 includes an inner cavity 205 and a locking rod 2041 protruding toward the inner cavity 205. The mounting ring 4211 is sleeved on the locking rod 2041 and fastened by the fastener 206. The upper end edge 202 includes a mounting groove 2021 leading to the inner cavity 205, and the retaining member 42 extends from the mounting groove 2021. Specifically, the backrest main body 20 may include an outer housing 203 facing away from the headrest portion 1 and an inner housing 204 facing the headrest portion 1. The outer housing 203 and the inner housing 204 may be connected together (e.g., snap-fit, threaded, riveted, or otherwise) to form the inner cavity 205 of the backrest main body 20. The fixing segment 421 may include a mounting ring 4211. For example, the retaining member 42 may be a tension spring, and the mounting ring 4211 may be a ring formed by winding a metal wire at the end of the tension spring. The inner housing 204 may include a locking rod 2041 protruding from an inner surface 2043 (a side facing the outer housing 203) of the inner housing 204 toward the outer housing 203. The mounting ring 4211 may be sleeved on the locking rod 2041. The locking rod 2041 includes a locking hole 2041A, and the fastener 206 may be inserted into the locking hole 2041A to cooperate with the locking rod 2041, which can fasten the mounting ring 4211 on the locking rod 2041. The inner housing 204 may also include a receiving portion 2042 in communication with the inner cavity 205. The retaining member 42 is fixed to the backrest main body 20 via the mounting ring 4211, extends through the receiving portion 2042, and then extends out of the mounting groove 2021. The receiving portion 2042 can prevent the retaining member 42 from shaking. Although as shown in FIG. 6, the locking rod 2041 is configured to protrude from the inner surface 2043 of the inner housing 204 toward the outer housing 203, the locking rod 2041 may also be configured to protrude from the outer housing 203 toward the outer housing 203. In addition, although as shown in FIG. 6, the inner housing 204 includes the receiving portion 2042, the inner housing 204 may not include the receiving portion 2042, and further fix the fixing segment 421 by other means, such as gluing or snapping.

In one or more other embodiments, the retaining member 42 may also be connected to the backrest portion 2 by welding, riveting, bonding or plugging. In one or more embodiments, the pull-up strap assembly 41 may be provided with a bag-shaped positioning structure, and the upper end of the retaining member 42 may be removably inserted into the positioning structure (not shown in figures); in some other embodiments, the lower end of the pull-up strap assembly 41 is provided with a snap-fit groove, which is overlapped on the backrest portion 2 through the snap-fit groove, such that the caregiver can remove the retaining member 42 by himself when it is not needed.

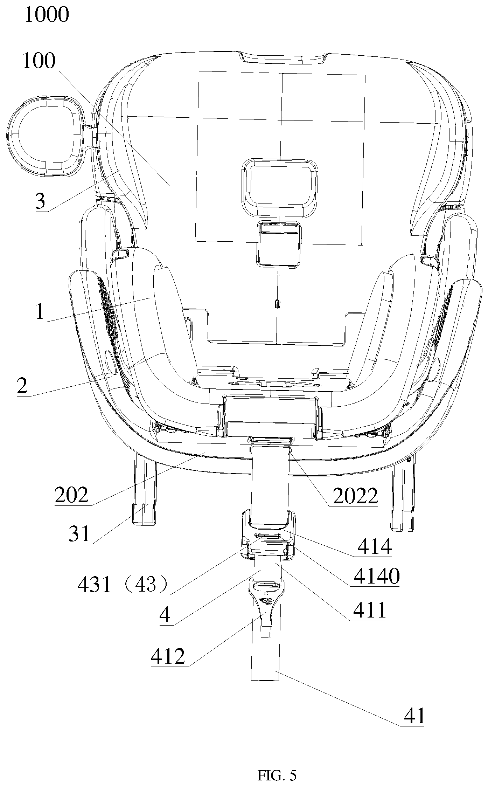

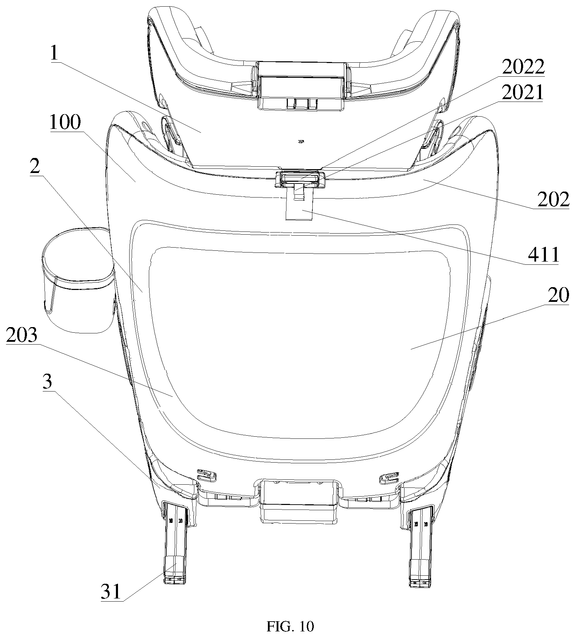

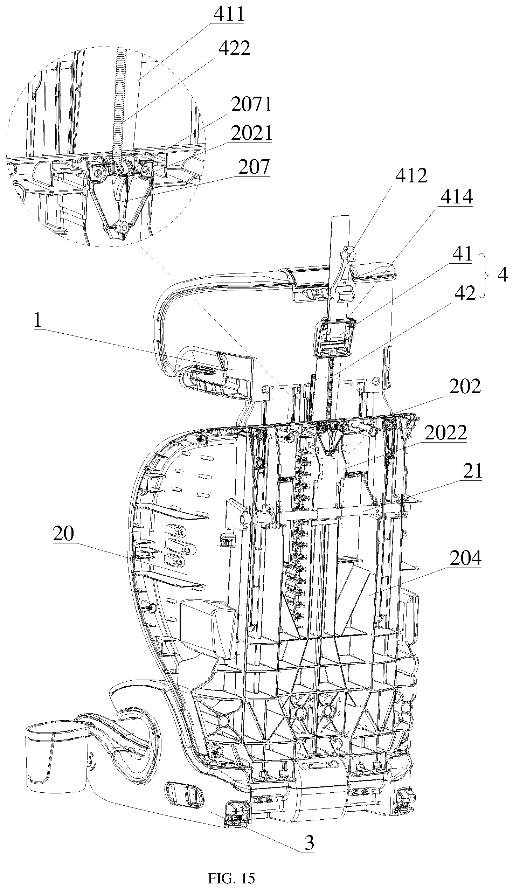

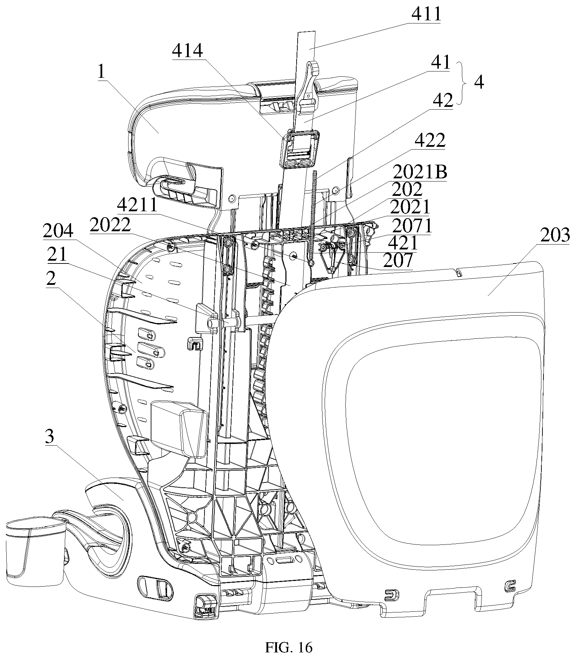

Referring to FIG. 5, FIG. 6 and FIG.8, the pull-up strap assembly 41 is in a straight line shape, and the pull-up strap assembly 41 includes a woven strap 411 and a length adjusting member 414. A first end of the woven strap 411 is connected to the backrest portion 2 and a second end of the woven strap 411 can be connected to the car seat. As shown in FIG. 10, when the retaining member 41 is not mounted, due to the softness of the woven strap 411, the woven strap 411 directly collapses on the seat body 100, and the top strap mechanism 4 is hard for the caregiver to notice, and thus easily forgets to connect the top strap mechanism 4 to the car seat. The retaining member 42 includes a fixing segment 421 and a supporting segment 422 connected to the fixing segment 421. The fixing segment 421 is connected to the backrest main body 20. When the top strap mechanism 4 is in a relaxed state, the supporting segment 422 extends upward from the upper end edge 202 of the backrest main body 20 and is connected to the woven strap 411. A first end of the woven strap 411 may be fixedly connected or removably connected to the backrest portion 2, and a second end of the woven strap 411 can be directly connected to the car seat (for example, tied to the car seat) or connected to the car seat via other components. The backrest portion 2 may include a fixing rod 21 (see FIG. 15 and FIG. 16). The first end of the woven strap 411 is connected to the fixing rod 21, and the second end of the woven strap 411 is connected to the car seat. The backrest main body 20 may include an outer housing 203 facing away from the headrest portion 1 and an inner housing 204 facing the headrest portion 1. The outer housing 203 and the inner housing 204 may be connected together (e.g., snap-fit, threaded, riveted, or otherwise) to form an inner cavity 205 of the backrest main body 20. The fixing rod 21 is received in the inner cavity 205 and connected to the backrest main body 20. The upper end edge 202 of the backrest portion 2 is provided with a pull-up strap through groove 2022 for mounting the woven strap 411 and a mounting groove 2021 for mounting the retaining member 42. Both the pull-up strap through groove 2022 and the mounting groove 2021 are in communication with the inner cavity 205. The mounting groove 2021 is inclined forward from bottom to top, and the fixing segment 421 is inserted in the mounting groove 2021 in a forwardly inclined manner. The top of the mounting groove 2021 is provided with an abutment portion 2021A protruding backward, and the abutment portion 2021A abuts against the supporting segment 422 and warps backward, thereby providing a preset tension to the retaining member 42. The first end of the woven strap 411 is connected to the fixing rod 21 and extends from the inner cavity 205 through the abutment portion 2021A and is supported by the supporting segment 422.

Referring to FIG. 4, FIG. 6 and FIG.10, The second end of the woven strap 411 may be directly connected to the car seat (not shown in the figure) or connected to the car seat through other components. The pull-up strap assembly 41 may include a snapping member 412. The snapping member 412 is adjustably connected to the second end of the woven strap 411, such that the woven strap 411 can be moved through the snapping member 412 by pulling the second end of the woven strap 411, thereby adjusting the length of the woven strap 411 between the snapping member 412 and the backrest portion 2. The snapping member 412 can be a hook or other form, as long as the woven strap 411 can be connected to the car seat.

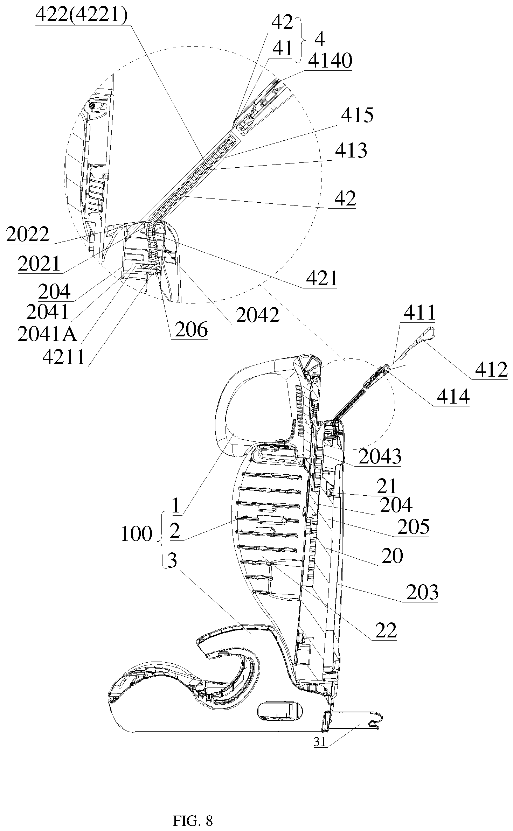

See FIG. 8, which shows the connection mode of the woven strap 411 and the retaining member 42. The pull-up strap assembly 41 may also include a pocket 415 connected to the woven strap 411. The pocket 415 may be sewn, bonded (e.g., hot-melt bonded) on the woven strap 411, or may be integrally formed with the woven strap 411 (e.g., the pocket 415 is formed by weaving the woven strap 411). The pocket 415 may be made of the same material as the woven strap 411, or may be made of different materials. The fixing segment 421 is connected to the backrest portion 2, and the supporting segment 422 may be covered in the pocket 415, such that the entire retaining member42 is covered and the top strap mechanism 4 is more aesthetically pleasing. The fixing segment 421 may also be removably connected to the backrest portion 2, and the supporting segment422 is sleeved in the pocket 415, so as to facilitate replacement, maintenance, or removal of the retaining member 42. The pull-up strap assembly 41 may also include a protective sleeve 413. The protective sleeve 413 is received in the pocket 415 and is sleeved on the supporting segment 422. The retaining member 42 may be an elastic member, and the protective sleeve 413 may be flexible. For example, the protective sleeve 413 may be a soft rubber jacket. Therefore, when the woven strap 411 is moved to tension the woven strap 411, the protective sleeve 413 may be compressed together with the retaining member 42. The protective sleeve 413 prevents the retaining member 42 from rubbing the pocket 415, therefore making the woven strap 411 rugged. In other embodiments, the retaining member 42 may also be sewn on the woven strap 411.

Referring to FIG. 4, FIG. 5 and FIG.10, the length adjusting member 414 is adjustably connected to the woven strap 411 to control the length of the woven strap 411. Referring to FIG. 6, the supporting segment 422 may be connected to the length adjusting member 414. For example, the support segment 422 may be connected to the length adjusting member 414 by bonding, hooking, clamping, or the like. The length adjusting member 414 is operated to adjust the length of the woven strap 411 connected between the backrest portion 2 and the length adjusting member 414, which allows the woven strap 411 to be tensioned or relaxed. When the length adjusting member 414 is operated to tension the woven strap 411, the retaining member 42 may be configured to bias length adjusting member 414 in a direction that causes the woven strap 411 to relax. In addition, although the length adjusting member 414 is shown in the figure, this embodiment may be implemented without including the length adjusting member 414, and when the pull-up strap assembly 41 does not include the length adjusting member 414, as described above, the supporting segment 422 may be connected to the woven strap 411.

Referring to FIG. 1, FIG. 5, and FIG. 9, the length adjusting member 414 may include a display window 4140. The top strap mechanism 4 may further include an indicating member 43. The indicating member 43 includes a first indication region 431 and a second indication region 432. When the woven strap 411 is pulled such that the woven strap 411 is tensioned between the backrest portion 2 and the length adjusting member 414, the first indication region 431 of the indicating member 43 faces to the display window 4140, and when the woven strap 411 is loosened such that the woven strap 411 is relaxed between the backrest portion 2 and the length adjusting member 414, the second indication region 432 of the indicating member 43 faces to the display window 4140. The first indication region 431 and the second indication region 432 can be displayed in different colors. For example, the first indication region 431 is green and the second indication region 432 is red. In this way, by observing the display of the indicating member 43 at the display window 4140, the caregiver can easily know the status of the woven strap 411 to prompt the caregiver to tighten the woven strap 411 as required, thereby further reminding the caregiver to connect the top strap mechanism 4 to the car seat. The first indication region 431 and the second indication region 432 may also be displayed in other manners, for example, in text.

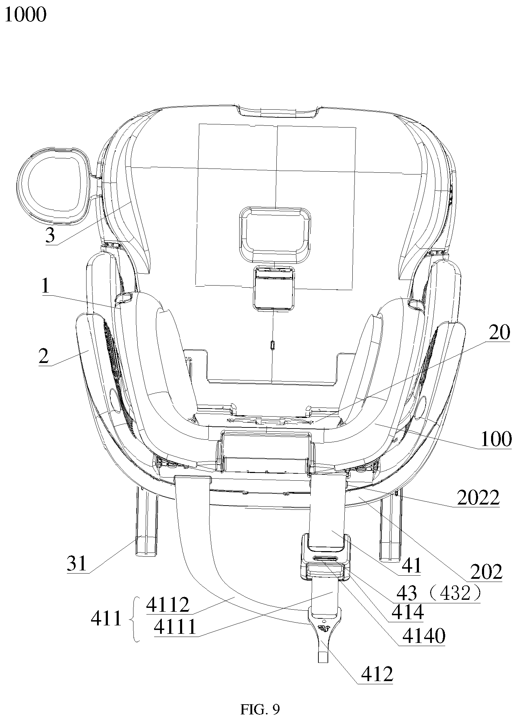

According to still another embodiment of the present disclosure, referring to FIG. 9, the pull-up strap assembly 41 may be Y-shaped. When the pull-up strap assembly 41 is Y-shaped, the woven strap 411 may include a first woven strap segment 4111 and a second woven strap segment 4112 connected to the first woven strap segment 4111. The first woven strap segment 4111 and the second woven strap segment 4112 may be integrally formed or connected in other manners. The first woven strap segment 4111 and the second woven strap segment 4112 are connected to opposite sides of the backrest portion 2, respectively. The first woven strap segment 4111 and the second woven strap segment 4112 may protrude from opposite sides of the upper end edge 202. The pull-up strap assembly 41 between the first woven strap segment 4111 and the second woven strap segment 4112 can be connected to the car seat, for example, to the car seat via the snapping member 412, thereby making the pull-up strap assembly 41 approximately Y-shaped. The retaining member 42 is connected to the woven strap segment in which the length adjusting member 414 is located and supports the woven strap segment, such that the woven strap segment (the first woven strap segment 4111 shown in the figure) protrudes upward from the backrest portion 2 and is supported by the retaining member 42. Optionally, the top strap mechanism 4 may also include two retaining members 42, which are connected to the first woven strap segment 4111 and the second woven strap segment 4112 respectively.

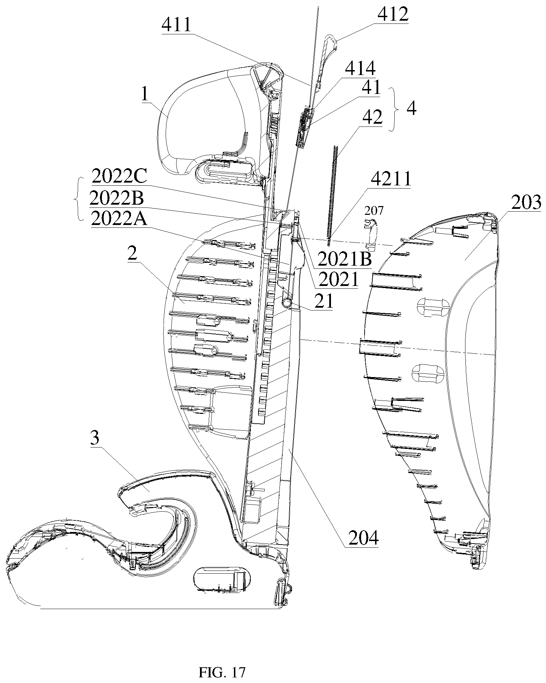

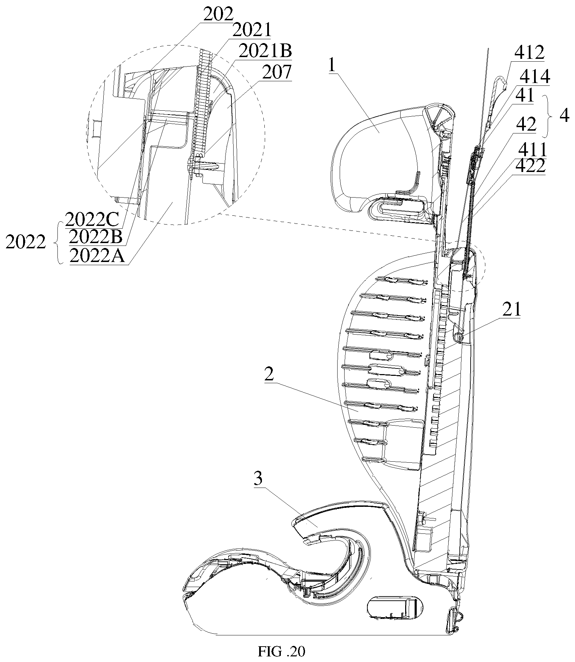

According to still another embodiment of the present disclosure, referring to FIG. 15 to FIG. 20, a mounting groove 2021 is formed on the upper end edge 202 of the backrest portion 2, such that the retaining member 42 is inserted into the upper end edge 202. As shown in FIG. 16, FIG. 17, and FIG. 20, the mounting groove 2021 extends forward from the upper end edge 202 in the longitudinal direction (the length direction of backrest portion 2) from bottom to top to on the inner housing 204 of the backrest portion 2. The fixing segment 421 is inserted into the mounting groove 2021 along the mounting groove 2021. Referring to FIG. 20, the retaining member 42 is inserted vertically into the mounting groove 2021, the fixing segment 421 and the supporting segment 422 are an integrated part, and extension directions of the fixing segment 421 and the supporting segment 422 are the same. A width of the top of the mounting groove 2021 is greater than a width of the bottom, the top of the mounting groove 2021 is fan-shaped, and a guide space 2021B is formed on the top of the mounting groove 2021. Under the pressing of the woven strap 411, the supporting segment 422 of the retaining member 42 can be bent in the front direction and the back direction, but the retaining member 42 is prevented from being bent in the left direction and right direction, which will result in being shielded by the headrest portion 1. In addition, the retaining member 42 can be avoided from being damaged due to excessive bending. The backrest portion 2 includes a support bracket 207, and a surface of the support bracket 207 has a groove 2071 for receiving the retaining member 42 to form a portion of the mounting groove 2021. When the retaining member 42 is inserted into the mounting groove 2021, the support bracket 207 can be engaged in the mounting groove 2021 and support the retaining member 42 from back to front. The depth at the top of the groove 2071 of the support bracket 207 is greater than the depth at the bottom of the groove 2071 of the support bracket 207, and the guide space 2021B is formed at the top of the groove 2071 of the support bracket 207. The support bracket 207 fastens an end of the fixing segment 421 to the inner housing 204 of the backrest portion 2. As shown in FIG. 16 and FIG. 17, the fixing segment 421 may include a mounting ring 4211, and the mounting ring 4211 is fixed to the inner housing 204 by using rivets at one end of the support bracket 207. Another end of the support bracket 207 is inclined forward to support the back-warped supporting segment 422. In this embodiment, a pull-up strap through groove 2022 is further formed on the upper end edge 202 of the backrest portion 2, such that the woven strap 411 passes through the pull-up strap through groove 2022. The pull-up strap through groove2022 is located in front of the mounting groove 2021. Optionally, the pull-up strap through groove 2022 may be located behind the mounting groove 2021, or the pull-up strap through groove 2022 and the mounting groove 2021 are the same groove. The pull-up strap through groove 2022 extends from the upper end edge 202 in the longitudinal direction on the inner housing 204 of the backrest portion 2. As can be seen in FIG. 17 and FIG. 20, the pull-up strap through groove 2022 meanders from the upper end edge 202 toward the bottom of the backrest portion 2, thereby directing the woven strap 411 to bypass the fixing segment 421, preventing the woven strap 411 from being winded with the retaining member 42. The pull-up strap through groove 2022 may include three segments in communication with each other. A first through groove segment 2022A extends longitudinally from a position where the woven strap 411 is fixed to approximately the same horizontal position as the fixing segment 421 of the retaining member 42. A second through groove segment 2022B extends transversely from the same horizontal position as the fixing segment 421 of the retaining member 42. The third through groove segment 2022C is inclined backward from top to bottom from the upper end edge 202, thereby bringing the woven strap 411 close to the retaining member 42 above the backrest portion 2. A specific structure of the top strap mechanism 4 is basically the same as that in the foregoing embodiment, and details are not described herein again.

According to still another embodiment of the present disclosure, a child safety seat 1000 is provided. The child safety seat 1000 of the present disclosure includes a seat body 100 and a top strap mechanism 4, and the seat body 100 includes a base and a seat portion 3 mounted on the base. The backrest portion 2 is provided on the seat portion 3. A back end of the base is provided with a top rod configured to abut against the backrest of the vehicle seat, so as to prevent the child safety seat 1000 from rolling. The top rod is located behind the backrest portion 2. One end of the top strap mechanism 4 is connected to the top rod. The top strap mechanism 4 includes a pull-up strap assembly 41 and a retaining member 42. One end of the pull-up strap assembly 41 is connected to an upper end of the top rod, and another end of the pull-up strap assembly 41 is provided with a hook configured to be engaged with the anchor point of the vehicle seat. One end of the retaining member 42 is connected to the top rod, and another end of the retaining member 42 is connected to the pull-up strap assembly 41. The retaining member 42 is an elastic member, and applies an upward force to the pull-up strap assembly 41, so as to support the pull-up strap assembly 41 to protrude upward relative to the seat body 100 and serve as a reminder for the caregiver. A specific structure of the top strap mechanism 4 is basically the same as that in the foregoing embodiment, and details are not described herein again.

The technical features of the aforementioned embodiments may be combined arbitrarily. To simplify the description, not all the possible combinations of the technical features in the aforementioned embodiments are described. However, all of the combinations of these technical features should be considered as within the scope of the present disclosure, as long as such combinations do not contradict with each other.

The aforementioned embodiments only represent several examples of the present disclosure, and the description thereof is more specific and detailed, but it should not be construed as restricting the scope of the present disclosure. It should be noted that, for those skilled in the art, several variations and improvements may be made without departing from the concept of the present disclosure, and these are all within the protection scope of the present disclosure. Therefore, the protection scope of the present disclosure shall be defined by the appended claims.

## Claims

1. A child safety seat (1000), comprising a seat body and a top strap mechanism (4), wherein the top strap mechanism (4) is connected to a backrest portion (2) of the seat body, and the top strap mechanism (4) comprises:
a pull-up strap assembly (41), one end of the pull-up strap assembly (41) being connected to the seat body, and another end of the pull-up strap assembly (41) being provided with a snapping member (412) configured to be engaged with a vehicle seat; and
a retaining member (42) connected to both the seat body and the pull-up strap assembly (41), wherein the retaining member (42) is an elastic member and applies an upward force to the pull-up strap assembly (41), such that the retaining member (42) is capable of supporting the pull-up strap assembly (41) to protrude upward relative to the child safety seat (1000);
wherein when the pull-up strap assembly (41) is in a relaxed state, the retaining member (42) is capable of supporting the pull-up strap assembly (41) to protrude upward relative to the backrest portion (2); when the pull-up strap assembly (41) is in a tensioned state, the pull-up strap assembly (41) is capable of pressing against the retaining member (42), such that the retaining member (42) is elastically deformed.

2. The child safety seat (1000) according to claim **1,** wherein the retaining member (42) comprises a fixing segment (421) and a supporting segment (422) connected to the fixing segment (421), the fixing segment (421) is connected to the backrest portion (2), and when the top strap mechanism (4) is in a relaxed state, the supporting segment (422) extends upward from an upper end edge (202) of the backrest portion (2) and is configured to support the pull-up strap assembly (41).

3. The child safety seat (1000) according to claim 2, wherein the supporting segment (422) comprises a first bending segment (4221), and the first bending segment (4221) warps backward from the upper end edge (202) toward a direction away from the backrest portion (2).

4. The child safety seat (1000) according to claim 2 or 3, wherein the supporting segment (422) comprises a second bending segment (4222), and the second bending segment (4222) extends forward toward a direction close to the backrest portion (2), such that the pull-up strap assembly (41) is maintained in front of the backrest portion (2).

5. The child safety seat (1000) according to any one of claims 2 to 4, wherein a mounting groove (2021) and a pull-up strap through groove (2022) are formed on the upper end edge (202) of the backrest portion (2), the fixing segment (421) is inserted in the mounting groove (2021); the pull-up strap assembly (41) passes through the pull-up strap through groove (2022); and
a width of a top of the mounting groove (2021) is greater than a width of a bottom of the mounting groove (2021), so as to form a guide space (2021B) for the retaining member (42) at the top of the mounting groove (2021).

6. The child safety seat (1000) according to claim 5, wherein the mounting groove (2021) is inclined forward from bottom to top, the fixing segment (421) is inserted in the mounting groove (2021) inclinedly along the mounting groove (2021), the top of the mounting groove (2021) is provided with an abutment portion (2021A) protruding backward, and the abutment portion (2021A) abuts against the supporting segment (422) to warp backward, such that an extension direction of the fixing segment (421) and an extension direction of the supporting segment (422) are different.

7. The child safety seat (1000) according to any one of claims 2 to 6, wherein the backrest portion (2) comprises a fastener (206) connected to the backrest main body (20), the fixing segment (421) is connected to the backrest main body (20) via the fastener (206), the fixing segment (421) comprises a mounting ring (4211), the backrest main body (20) comprises an outer housing (203) and an inner housing (204) connected together to form an inner cavity (205), the backrest main body (20) further comprises a locking rod (2041) protruding from one of the outer housing (203) and the inner housing (204) to the inner cavity (205), the mounting ring (4211) is sleeved on the locking rod (2041) and fastened by the fastener (206), the upper end edge (202) comprises a mounting groove (2021) in communication with the inner cavity (205), and the retaining member (42) protrudes outward from the mounting groove (2021).

8. The child safety seat (1000) according to any one of claims 1 to 7, wherein the pull-up strap assembly (41) comprises a woven strap (411) and a length adjusting member (414), a first end of the woven strap (411) is connected to the backrest portion (2) and a second end of the woven strap (411) is provided with the snapping member (412);
the length adjusting member (414) passes through the woven strap (411) and is configured to adjust a length of the woven strap (411);
the supporting segment (422) is connected to the woven strap (411) or the length adjusting member (414).

9. The child safety seat (1000) according to any one of claims 1 to 8, wherein the pull-up strap assembly (41) is Y-shaped, and the pull-up strap assembly (41) comprises a woven strap (411) and a snapping member (412) passing through the woven strap (411);
the snapping member (412) divides the woven strap (411) into a first woven strap segment (4111) and a second woven strap segment (4112) connected to the first woven strap segment (4111), the first woven strap segment (4111) and the second woven strap segment (4112) are connected to opposite sides of the backrest portion (2) respectively;
the first woven strap segment (4111) is provided with a length adjusting member (414), and the retaining member (42) is connected to the first woven strap segment (4111).

10. The child safety seat (1000) according to any one of claims 1 to 9,
wherein the retaining member (42) is at least one of a compression spring, a tension spring, a herringbone spring, a spring sheet and a gooseneck;
the supporting segment (422) is sewn on the pull-up strap assembly (41); or
the pull-up strap assembly (41) is provided with a pocket (415), and the supporting segment (422) is sleeved in the pocket (415).

11. The child safety seat (1000) according to any one of claims 1 to 10, wherein the seat body further comprises a top rod, the top rod is arranged behind the backrest portion (2), and one end of the pull-up strap assembly (41) is connected to the top rod of the seat body;
the retaining member (42) comprises a fixing segment (421) and a supporting segment (422) connected to the fixing segment (421), the fixing segment (421) is connected to the top rod, the supporting segment (422) extends upward from an upper end of the top rod and is configured to support the pull-up strap assembly (41).
